# EUROPEAN PATENT SPECIFICATION

(11) **EP 1 915 588 B1**
(45) Date of publication and mention of the grant of the patent: **30.09.2015**
(21) Application number: 05772609.3
(22) Date of filing: 17.08.2005
(51) Int. Cl.: G01C 21/36, G01C 21/00, G06F 1/16

(54) **NAVIGATION DEVICE AND METHOD OF SCROLLING MAP DATA DISPLAYED ON A NAVIGATION DEVICE**
NAVIGATIONSEINRICHTUNG UND VERFAHREN ZUM ROLLEN VON AUF EINER NAVIGATIONSEINRICHTUNG ANGEZEIGTEN KARTENDATEN
DISPOSITIF DE NAVIGATION ET PROCÉDÉ DE DÉFILEMENT DE DONNÉES DE CARTE AFFICHÉES SUR UN DISPOSITIF DE NAVIGATION

(43) Date of publication of application: 30.04.2008
(73) Proprietor: TomTom International B.V., 1011 AC Amsterdam (NL)
(72) Inventor: HALTERS, Ingrid, NL-1015 AA Amsterdam (NL); SERHIY, Tkachenko, NL-5663 HS Geldrop (NL)
(74) Representative: Dobson, Adrian
(86) International application number: PCT/NL2005/000595
(87) International publication number: WO 2007/021169

(56) References cited:
- EP-A- 0 825 514
- US-A1- 2003 023 370
- US-A1- 2003 151 592
- US-B1- 6 288 704
- PATENT ABSTRACTS OF JAPAN vol. 1998, no. 02, 30 January 1998 (1998-01-30) -& JP 09 274429 A (NISSAN MOTOR CO LTD), 21 October 1997 (1997-10-21)
- PATENT ABSTRACTS OF JAPAN vol. 1995, no. 06, 31 July 1995 (1995-07-31) & JP 07 084714 A (CASIO COMPUT CO LTD), 31 March 1995 (1995-03-31)

## Description

### FIELD OF THE INVENTION

The present invention relates to a navigation device, comprising a processing unit and a display, the processing unit being arranged to display map data on the display.

Also, the present invention relates to a method of scrolling map data displayed on a navigation device.

### STATE OF THE ART

Prior art navigation devices based on GPS (Global Positioning System) are well known and are widely employed as in-car navigation systems. Such a GPS based navigation device relates to a computing device which in a functional connection to an external (or internal) GPS receiver is capable of determining its global position. Moreover, the computing device is capable of determining a route between start and destination addresses, which can be input by a user of the computing device. Typically, the computing device is enabled by software for computing a "best" or "optimum" route between the start and destination address locations from a map database. A "best" or "optimum" route is determined on the basis of predetermined criteria and need not necessarily be the fastest or shortest route.

The navigation device may typically be mounted on the dashboard of a vehicle, but may also be formed as part of an on-board computer of the vehicle or car radio. The navigation device may also be (part of) a hand-held system, such as a PDA.

By using positional information derived from the GPS receiver, the computing device can determine at regular intervals its position and can display the current position of the vehicle to the user. The navigation device may also comprise memory devices for storing map data and a display for displaying a selected portion of the map data.

Also, it can provide instructions how to navigate the determined route by appropriate navigation directions displayed on the display and/or generated as audible signals from a speaker (e.g. 'turn left in 100 m'). Graphics depicting the actions to be accomplished (e.g. a left arrow indicating a left turn ahead) can be displayed in a status bar and also be superimposed upon the applicable junctions/turnings etc. in the map itself.

It is known to enable in-car navigation systems to allow the driver, whilst driving in a car along a route calculated by the navigation system, to initiate a route re- calculation. This is useful where the vehicle is faced with construction work or heavy congestion.

It is also known to enable a user to choose the kind of route calculation algorithm deployed by the navigation device, selecting for example from a 'Normal' mode and a 'Fast' mode (which calculates the route in the shortest time, but does not explore as many alternative routes as the Normal mode).

It is also known to allow a route to be calculated with user defined criteria; for example, the user may prefer a scenic route to be calculated by the device. The device software would then calculate various routes and weigh more favourably those that include along their route the highest number of points of interest (known as POIs) tagged as being for example of scenic beauty.

According to the prior art, navigation devices are arranged to display a map on a display, for instance to show a planned route to a user. This helps orientating oneself.

The navigation device may also be used just as a map display device, without the option of planning a route or displaying a current position. However, usually only part of the map is displayed. If a user wants to see a part of the map that is outside the range of the display, for instance to the left (or west) of the display, he/she needs to scroll the map to the right. This may be done by using (virtual) buttons provided at the navigation device or by using a mouse. The scrolling may also be done by moving a pen (stylus or pointer) or finger over a touch screen.

In terms of other relevant prior art, US6288704 describes a computer program, system and method to track motion and control navigation and display of an object viewer. Information content generated by a digital processor is mapped into a virtual display space suitable for conveying the information to a user. A certain portion of the virtual display space is displayed using a display device coupled to the digital processor. An image capture device captures an image from which a reference navigation target is acquired. Tracked movement of a display device relative to the reference navigation target is used to update the displayed certain portion of the virtual display space in a manner related to the tracked movement. In essence, the image capture device is provided in the front of the device along with the display device, and the image captured is of the user's head, such being the reference navigation target.

JP-09-274429 (Nissan Motor Co. Ltd.) describes a display processing means which displays map information which is registered in a display information database on a display. If a user of the electronic display device moves the device, a device-integrated mouse ball detects the amount of the movement and gives the amount to a movement amount computing device. This device performs scrolling of the map information displayed in accordance with the amount of the movement detected by the mouse ball.

EP0825514 describes an information processing device which, when an operation button is pushed, displays a menu on the screen of an LCD. When the whole portable type information processing device (PDA) is rotated around the X-axis, the Y-axis or the Z-axis with the operation button being pushed, the rotation is detected by a triaxial gyro sensor, and on the basis of the detection result a cursor displayed on the screen is moved on the menu. By releasing the operation button (2) when the cursor is located on a desired menu item, the selection of the menu item at which the cursor is located is settled, and the processing corresponding to the selected menu item is started.

US2003/0151592 describes a method for querying target information within a card view wherein a three-dimensional object is selected on the basis of a user input and data linked thereto is outputted. Preferably, in order to navigate within the card view, the gestures of the user are evaluated. The user can then navigate within a card view in a virtual manner and can easily query target information relating to an object.

Finally, JP-07-084714 (Casio) describes a command processor by means of which a scrolling function can be performed by virtue of a change in the shape of a user's hand. In this regard, information in a memory is display-outputted through a display memory to a display. On the other hand, the shape of a hand placed on the display is photographed by a camera, recognized as the pattern picture of a hand in each prescribed time by a picture recognizing part, and stored in a picture memory. A picture processing part recognizes that the pattern picture of a hand stored in the picture memory is an initial pattern picture for a scroll command, compares the pattern pictures of a hand written in the picture memory, and recognizes to which direction of a horizontal direction and a vertical direction, and which amounts an index finger moves.; Then, the display information of the display part is scrolled only to the index finger moving direction and amounts.

### SHORT DESCRIPTION OF THE INVENTION

It is an object of the invention to provide an alternative way of scrolling a map displayed by a navigation device. In order to obtain this object, the invention provides a navigation device as defined in claim 1 hereof. Further features of the invention are provided below and in the dependent claims hereof.

According to an embodiment of the invention, the processing unit is arranged to detect the movement of the navigation device from the camera feed using pattern recognition techniques. Using pattern recognition techniques is an easy and reliable way to measure movement of a camera. These pattern recognition techniques are known to a skilled person.

According to an embodiment of the invention, the processing unit is arranged to detect a direction from the detected movement and to scroll the displayed map data in a direction opposite from the detected direction. The detection of movement of the navigation device could be used to determine the scroll direction, providing an easy and intuitive way to scroll in a desired direction.

According to an embodiment of the invention, the processing unit is arranged to detect a distance from the detected movement and to scroll the displayed map data a scroll distance corresponding to the detected distance. The distance of scrolling the map can easily be controlled by a user by coupling it to the distance the navigation device is moved.

According to an embodiment of the invention, the scroll distance is adjusted based on a coefficient of sensitivity. The scroll distance may further depend on a coefficient of sensitivity, determining the amount of scrolling based on a detected movement of the navigation device.

According to an embodiment of the invention, the coefficient of sensitivity is adjustable. This provides the user with the option of changing the sensitivity of the system in accordance with his/her desires.

According to an embodiment of the invention, the coefficient of sensitivity further depends on the focus distance of the camera. Cameras may be provided with an auto-focus function. Information about the chosen focus distance may be provided by the camera to the processing unit. The distance of the objects in the camera feed, influences the amount of detected movement. When the camera is watching a nearby object, the amount of detected movement will be higher than when the camera watches a remote object. To compensate for this effect, the focus distance of the camera may be used to adjust the coefficient of sensitivity.

According to an embodiment of the invention, the processing unit is arranged to detect a rotation from the detected movement and to scroll the displayed map data by rotating the displayed map data in a direction opposite to the direction of the detected movement. This provides an easy and intuitive way to rotate the map view.

According to an embodiment of the invention, the processing unit is arranged to detect a movement in the direction of the optical axis of the camera and to scroll the displayed map data by performing a zoom operation corresponding to the detected movement. This provides an easy way of zooming in or out.

According to an embodiment of the invention, the navigation device further comprises memory devices to store map data.

According to an embodiment of the invention, the navigation device further comprises a positioning device, arranged to provide the processing unit with information to determine a current position of the navigation device, and the navigation device is arranged to be in a first mode, wherein the navigation device is arranged to display map data, or a second mode, wherein the navigation device is arranged to determine a current position using the positioning device, plan a route and guide the user through a planned route. This combines a map display device with a navigation device provided with the option of planning a route and guiding a user through the planned route.

According to an embodiment of the invention, the navigation device is arranged to switch from the first mode to the second mode, or vice versa, based on information from the positioning device.

According to an embodiment of the invention, the information from the positioning device is one of: a destination address, a velocity, an acceleration. These are indications whether or not the user would prefer to use the device in the first or second mode. For instance, when high velocities and/or high accelerations are detected, the user probably wants to use the navigation device in the second mode. When it is detected that a destination has been reached, the user probably does no longer want to use the navigation device in the second mode, so the navigation device may switch to the first mode automatically.

According to an embodiment of the invention, the navigation device is arranged to switch to the first mode in case no information is provided by the positioning device. In this case, the navigation device is most likely indoors, so the user doesn't need to use the navigation device in the second mode.

According to an embodiment of the invention, the navigation device is arranged to switch from the first mode to the second mode, or vice versa, based on input of a user, e.g. by pressing an appropriate button being connected to the processing unit.

According to an embodiment of the invention, the navigation device is further provided with internal sensors devices, such as an accelerometer and/or gyroscope, to further increase the accuracy of the detected movement of the navigation device based on the received camera feed. These internal sensor devices may be used to provide the navigation device with additional information to further increase the accuracy of the detected movement.

According to a further aspect, the invention relates to a method of scrolling map data displayed on a navigation device, the navigation device comprising a display, the method comprising:
- displaying map data on the display,
characterised in that the navigation device further comprises a camera, the method further comprising:
- receiving a camera feed from the camera,
- detecting a movement of the navigation device based on the received camera feed,
- scrolling the displayed map data in response to the detected movement.

According to a further aspect, the invention relates to a computer program, when loaded on a computer arrangement, is arranged to perform the above method.

According to a further aspect, the invention relates to a ddata carrier, comprising a computer program according to the above.

### SHORT DESCRIPTION OF THE DRAWINGS

Embodiments of the invention will now be described, by way of example only, with reference to the accompanying schematic drawings in which corresponding reference symbols indicate corresponding parts, and in which:
- Figure 1 schematically depicts a schematic block diagram of a navigation device,
- Figure 2 schematically depicts a schematic view of a navigation device,
- Figure 3 schematically depicts a side view of a navigation device according to an embodiment of the invention,
- Figure 4a, 4b and 4c schematically depict a front view, rear view and side view respectively of a navigation device according to an embodiment of the invention,
- Figure 5a, 5b and 5c schematically depict a navigation device according to an embodiment of the invention, and
- Figure 6 shows a flow diagram according to an embodiment of the invention.

### DETAILED DESCRIPTION OF THE INVENTION

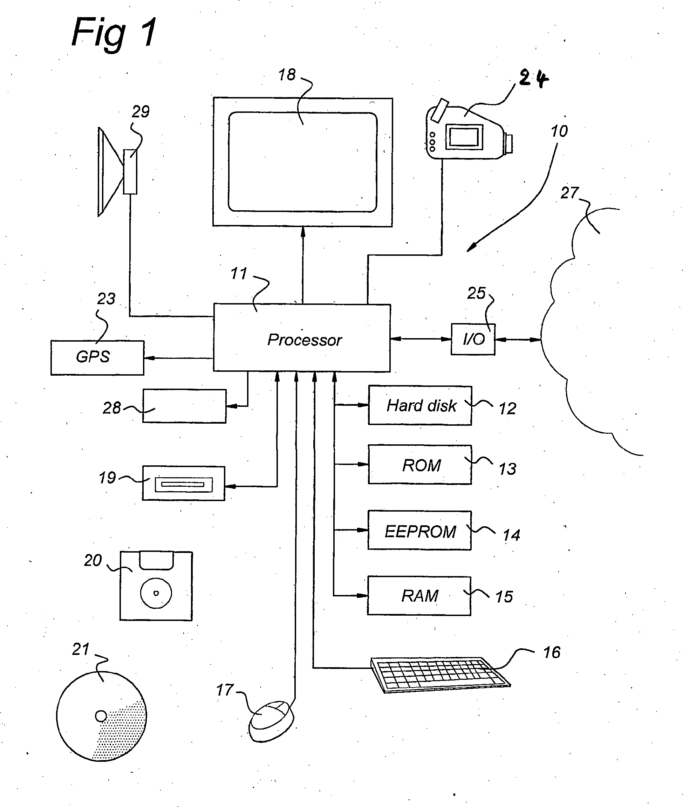

Figure 1 shows a schematic block diagram of an embodiment of a navigation device 10, comprising a processor unit 11 for performing arithmetical operations. The processor unit 11 is arranged to communicate with memory units that store instructions and data, such as a hard disk 12, a Read Only Memory (ROM) 13, Electrically Erasable Programmable Read Only Memory (EEPROM) 14 and a Random Access Memory (RAM) 15. The memory units may comprise map data. This map data may be two dimensional map data (latitude and longitude), but may also comprise a third dimensions (height). The map data may further comprise additional information such as information about petrol/gas stations, points of interest. The map data may also comprise information about the shape of buildings and objects along the road.

The processor unit 11 may also be arranged to communicate with one or more input devices, such as a keyboard 16 and a mouse 17. The keyboard 16 may for instance be a virtual keyboard, provided on a display 18, being a touch screen. The processor unit 11 may further be arranged to communicate with one or more output devices, such as a display 18, a speaker 29 and one or more reading units 19 to read for instance floppy disks 20 or CD ROM's 21. The display 18 could be a conventional computer display (e.g. LCD) or could be a projection type display, such as the head up type display used to project instrumentation data onto a car windscreen or windshield. The display 18 may also be a display arranged to function as a touch screen, which allows the user to input instructions and/or information by touching the display 18 with his finger.

The speaker 29 may be formed as part of the navigation device 10. In case the navigation device 10 is used as an in-car navigation device, the navigation device 10 may use speakers of the car radio, the board computer and the like.

The processor unit 11 may further be arranged to communicate with a positioning device 23, such as a GPS receiver, that provides information about the position of the navigation device 10. According to this embodiment, the positioning device 23 is a GPS based positioning device 23. However, it will be understood that the navigation device 10 may implement any kind of positioning sensing technology and is not limited to GPS. It can hence be implemented using other kinds of GNSS (global navigation satellite system) such as the European Galileo system. Equally, it is not limited to satellite based location/velocity systems but can equally be deployed using ground-based beacons or any other kind of system that enables the device to determine its geographical location.

However, it should be understood that there may be provided more and/or other memory units, input devices and read devices known to persons skilled in the art. Moreover, one or more of them may be physically located remote from the processor unit 11, if required. The processor unit 11 is shown as one box, however, it may comprise several processing units functioning in parallel or controlled by one main processor that may be located remote from one another, as is known to persons skilled in the art.

The navigation device 10 is shown as a computer system, but can be any signal processing system with analog and/or digital and/or software technology arranged to perform the functions discussed here. It will be understood that although the navigation device 10 is shown in Fig. 1 as a plurality of components, the navigation device 10 may be formed as a single device.

The navigation device 10 may use navigation software, such as navigation software from TomTom B.V. called Navigator. Navigator software may run on a touch screen (i.e. stylus controlled) Pocket PC powered PDA device, such as the Compaq iPaq, as well as devices that have an integral GPS receiver 23. The combined PDA and GPS receiver system is designed to be used as an in-vehicle navigation system. The invention may also be implemented in any other arrangement of navigation device 10, such as one with an integral GPS receiver/computer/display, or a device designed for non-vehicle use (e.g. for walkers) or vehicles other than cars (e.g. aircraft).

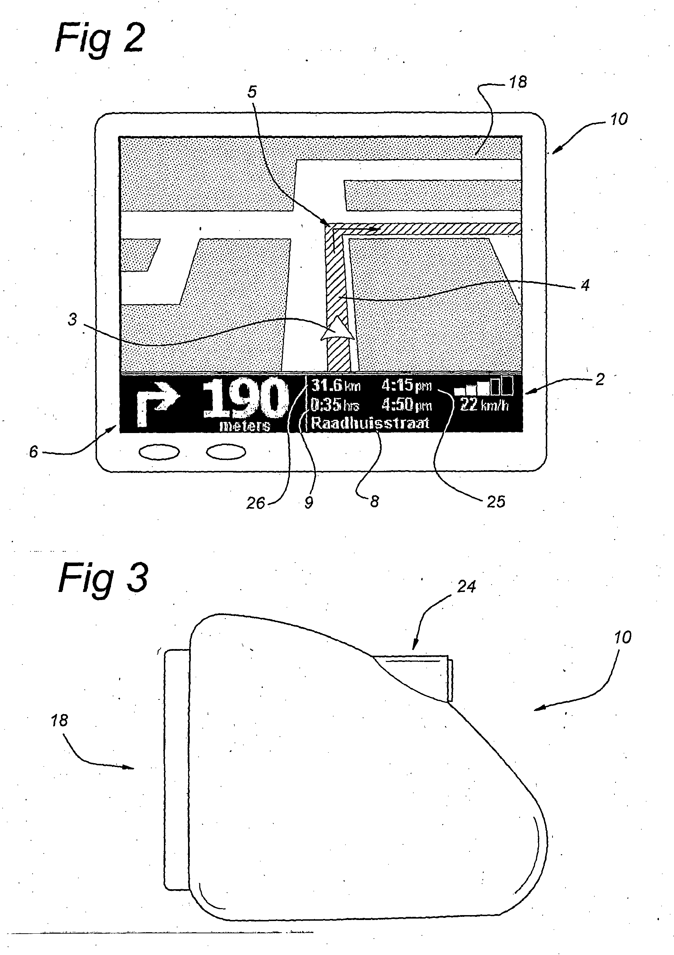

Figure 2 depicts a navigation device 10 as described above. Navigator software, when running on the navigation device 10, causes a navigation device 10 to display a normal navigation mode screen at the display 18, as shown in Fig. 2. This view may provide driving instructions using a combination of text, symbols, voice guidance and a moving map. Key user interface elements are the following: a 3-D map occupies most of the screen. It is noted that the map may also be shown as a 2-D map.

The map shows the position of the navigation device 10 and its immediate surroundings, rotated in such a way that the direction in which the navigation device 10 is moving is always "up". Running across the bottom quarter of the screen may be a status bar 2. The current location of the navigation device 10 (as the navigation device 10 itself determines using conventional GPS location finding) and its orientation (as inferred from its direction of travel) is depicted by a position arrow 3. A route 4 calculated by the device (using route calculation algorithms stored in memory devices 11, 12, 13, 14, 15 as applied to map data stored in a map database in memory devices 11, 12, 13, 14, 15) is shown as darkened (or highlighted) path. On the route 4, all major actions (e.g. turning corners, crossroads, roundabouts etc.) are schematically depicted by arrows 5 overlaying the route 4. The status bar 2 also includes at its left hand side a schematic icon depicting the next action 6 (here, a right turn). The status bar 2 also shows the distance to the next action (i.e. the right turn - here the distance is 50 meters) as extracted from a database of the entire route calculated by the device (i.e. a list of all roads and related actions defining the route to be taken). Status bar 2 also shows the name of the current road 8, the estimated time before arrival 9 (here 35 minutes), the actual estimated arrival time 25 (4:50 pm) and the distance to the destination 26 (31.6Km). The status bar 2 may further show additional information, such as GPS signal strength in a mobile-phone style signal strength indicator.

As already mentioned above, the navigation device may comprise input devices, such as a touch screen, that allows the users to call up a navigation menu (not shown). From this menu, other navigation functions can be initiated or controlled. Allowing navigation functions to be selected from a menu screen that is itself very readily called up (e.g. one step away from the map display to the menu screen) greatly simplifies the user interaction and makes it faster and easier. The navigation menu includes the option for the user to input a destination.

The actual physical structure of the navigation device 10 itself may be fundamentally no different from any conventional handheld computer, other than the integral GPS receiver 23 or a GPS data feed from an external GPS receiver. Hence, memory devices 12, 13, 14, 15 store the route calculation algorithms, map database and user interface software; a processor unit 12 interprets and processes user input (e.g. using a touch screen to input the start and destination addresses and all other control inputs) and deploys the route calculation algorithms to calculate the optimal route. 'Optimal' may refer to criteria such as shortest time or shortest distance, or some other user-related factors.

More specifically, the user inputs his start position and required destination into the navigation software running on the navigation device 10, using the input devices provided, such as a touch screen 18, keyboard 16 etc. The user then selects the manner in which a travel route is calculated: various modes are offered, such as a 'fast' mode that calculates the route very rapidly, but the route might not be the shortest; a 'full' mode that looks at all possible routes and locates the shortest, but takes longer to calculate etc. Other options are possible, with a user defining a route that is scenic-e.g. passes the most POI (points of interest) marked as views of outstanding beauty, or passes the most POIs of possible interest to children or uses the fewest junctions etc.

Roads themselves are described in the map database that is part of navigation software (or is otherwise accessed by it) running on the navigation device 10 as lines-i.e. vectors (e.g. start point, end point, direction for a road, with an entire road being made up of many hundreds of such sections, each uniquely defined by start point/end point direction parameters). A map is then a set of such road vectors, plus points of interest (POIs), plus road names, plus other geographic features like park boundaries, river boundaries etc, all of which are defined in terms of vectors. All map features (e.g. road vectors, POIs etc.) are defined in a co-ordinate system that corresponds or relates to the GPS co-ordinate system, enabling a device's position as determined through a GPS system to be located onto the relevant road shown in a map.

Route calculation uses complex algorithms that are part of the navigation software. The algorithms are applied to score large numbers of potential different routes. The navigation software then evaluates them against the user defined criteria (or device defaults), such as a full mode scan, with scenic route, past museums, and no speed camera. The route which best meets the defined criteria is then calculated by the processor unit 11 and then stored in a database in the memory devices 12, 13, 14, 15 as a sequence of vectors, road names and actions to be done at vector end-points (e.g. corresponding to pre-determined distances along each road of the route, such as after 100 meters, turn left into street x).

Navigation device 10 is provided with a camera 24 as shown in Fig. 1. Fig. 3 schematically depicts a side view of the navigation device 10, showing camera 24 being formed integrally with the navigation device 10. Fig. 3 also schematically shows display 18. The camera 24 is arranged to produce a camera feed and transmit this camera feed to the processor unit 11, shown in Fig.1. Processor unit 11 is arranged to analyse the received camera feed as will be described below.

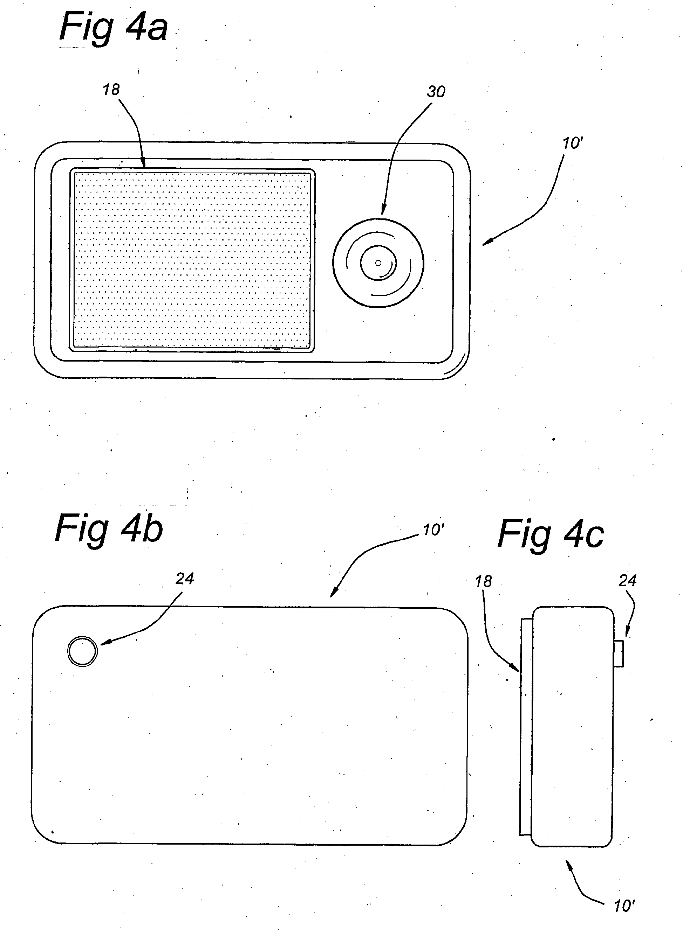

Fig.'s 4a and 4b show a front and rear view respectively, of an alternative navigation device 10'. Fig. 4a shows a display 18, displaying a part of the map data, and a button arrangement 30, comprising one or more integrally formed buttons. Fig. 4b shows camera 24 being provided at the rear side of the navigation device 10'. Finally, Fig. 4c schematically shows a side view of the navigation device 10'.

The alternative navigation device 10' described with reference to Fig.'s 4a, 4b and 4c is mainly a map display device, without the option of determining a current position of the navigation device 10', planning a route and guiding a user to a destination address. Thus, navigation device 10' is arranged to be operable in a first mode only, wherein the navigation device 10' is just used as a map display device, while the navigation device 10 is arranged to be operable in the first mode and a second mode, wherein the second mode is to determine a current position, plan a route and guide the user through a planned route.

It will be understood that both the navigation device 10 described with reference to Fig.'s 1, 2 and 3, as well as the navigation device 10' described with reference to Fig.'s 4a, 4b and 4c may be used in combination with the invention.

According to the invention, the navigation device 10, 10' is arranged to detect movement of the navigation device 10, 10' by analyzing the images registered by the camera 24. This may be done by using simple pattern recognition techniques, known from the prior art.

For instance, pattern recognition techniques are known that are able to distinguish certain characterizing features (edges, corners) in the camera feed and follow that features when the camera 24 (or the item being filmed) moves. By doing so, movement of the camera 24 can be detected. In order to do this, the memory devices 12, 13, 14, 15 may store program instructions instructing the processor unit 11 to perform pattern recognition techniques to detect movement of the camera 24, and thus of the navigation device 10, 10'.

The pattern recognition techniques preferably follow a plurality of features in the camera feed. The more features are followed, the more reliable the movement of the navigation device 10, 10' can be detected. In case a plurality of features is followed, the processor unit 11 may only determine a movement of the camera 24 in case the majority of the features participate in a similar movement (for instance more than 75%). This prevents erroneous detection of movement caused by movement of an object being filmed. Movement of an object being filmed usually only results in the movement of a relatively small number of features.

The camera 24 preferably is capable of focusing on an object being relatively close to the navigation device 10, 10', to allow use of the scroll option according to the invention, when the navigation device 10, 10' lays on a table or the like.

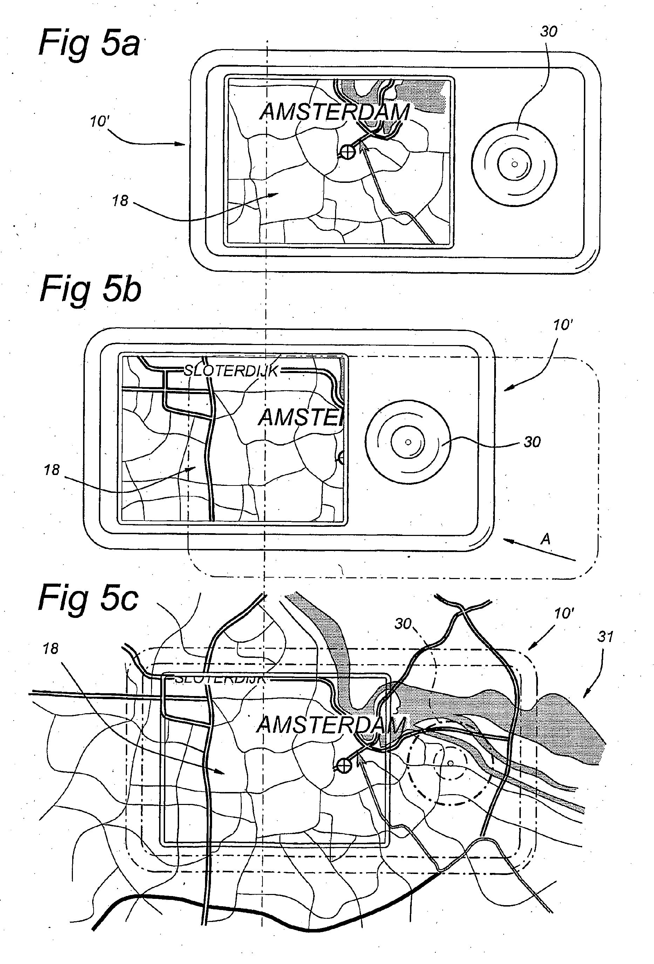

Based on the detected camera movement, the displayed map is scrolled. For instance, when a movement of the camera 24 to the left is detected, the map may be scrolled to the right. Of course, the map data may also be scrolled to the left based on a detected movement of the navigation device 10 to the left, but scrolling in the opposite direction of the detected movement better corresponds to the intuition of a user, as will be further explained under reference to Fig. 5c.

This is further shown in Fig.'s 5a and 5b. Fig. 5a depicts a navigation device 10' similar to Fig. 4a. Fig. 5b depicts a navigation device 10' similar to Fig. 5a, which is moved to the top left along arrow A in comparison with its position in the real world in Fig. 5a. This movement is detected by the navigation device 10' by analyzing the camera feed 24 received from the camera 24 using pattern recognition techniques as described above. This also applies to the navigation device 10 depicted in Fig.'s 1, 2 and 3.

Of course, a coefficient of sensitivity may be applied to determine the scroll distance based on the detected movement of the navigation device 10, 10'. This coefficient of sensitivity may be adjustable by the user, for instance via menus available on the navigation device 10, 10'.

When the movement of the navigation device 10, 10' is detected, the processor unit 11 is arranged to scroll the displayed map data in a corresponding direction, in this case in the opposite direction, being to the bottom right. The distance the map is scrolled (the scroll distance) depends on the distance of the detected movement of the navigation device 10, 10'. It will be understood that the distance of movement of features within the camera feed being followed not only depends on the distance moved by the navigation device 10, 10', but also on the distance between the navigation device 10, 10' and the objects being filmed. Therefore, the coefficient of sensitivity may also depend on the distance between the camera 24 and the items being filmed. This distance may be determined by the processing unit 11 or the camera 24 by determining the appropriate focus distance.

The above results in a navigation device 10, 10', that when moved, creates the illusion that the navigation device 10, 10' is like a magnifying glass used to look at a map that extends beyond the boundaries of the display 18. When the navigation device 10 is moved, a different part of the map is shown. This is schematically shown in Fig. 5c. Fig. 5c shows the navigation device 10, 10' being surrounded by virtual map data 31. When the navigation device 10, 10' is moved to the right, the virtual map data 31 being to the right of the navigation device 10, 10' is displayed. In other words: it is as if the navigation device 10, 10' moves over an infinite map.

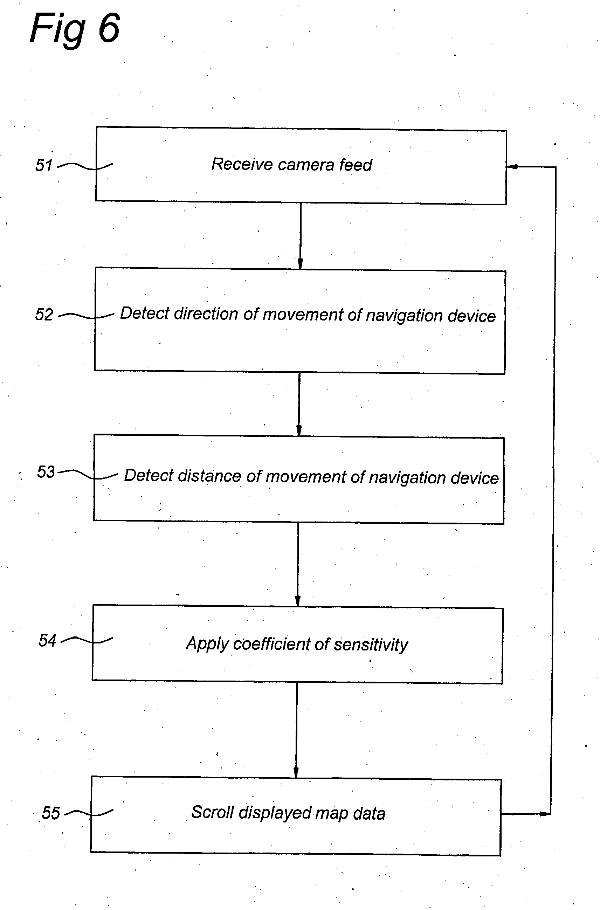

Fig. 6 schematically depicts a flow diagram of the steps performed by the processor unit 11 when performing the above described scroll method.

In a first step 51 the processor unit 11 receives the camera feed from the camera 24. In fact, the camera feed may be a continuous signal being constantly received by the processor unit 11.

In a second step 52, the processor unit 11 detects the direction of movement of the navigation device 10, 10' based on the received camera feed. This may be done by using all sorts of analyzing techniques, for instance pattern recognition techniques as described above.

In a third step 53, the processor unit 11 detects the distance of movement of the navigation device 10, 10' based on the detected movement of the received camera feed. Again, this may be done by using all sorts of analyzing techniques, for instance as described above.

In a fourth step 54 the detected distance may be multiplied with a coefficient of sensitivity. This coefficient may be adjustable by a user, or may depend on the distance between the camera 24 and the items being filmed or on the map scale.

Finally, in a fifth step 55, the displayed map data is scrolled in a direction corresponding to the detected direction (e.g. opposite direction). The scroll distance may depend on the detected distance of movement of the navigation device and coefficient of sensitivity.

It will be understood that the processor unit 11 is actually in a loop and is constantly receiving and analyzing the camera feed and constantly scrolls the displayed map data accordingly.

The above only is about lateral movement of the navigation device 10, 10' and map data. However, it will be understood that the above may also be used for other types of movements, such as performing rotational movement and performing zoom operations.

Using the above mentioned pattern recognition techniques a rotational movement of the navigation device 10, 10' may be detected. This may be done by following characterizing features (edges, corners) in the camera feed and follow that features as described above. The direction of rotation and the angle of the rotation are both detected by the processor unit 11 based on the camera feed. Next, the displayed map data are scrolled (rotated) in the opposite direction over a similar angle.

Using the above mentioned pattern recognition techniques a movement of the navigation device 10, 10' in the direction of the optical axis of the camera 24 may be detected. This may be done by following characterizing features (edges, corners) in the camera feed and follow that features. The direction of movement and the amount of movement may be detected by the processor unit 11 based on the camera feed. When a movement along the optical axis of the camera 24 in the direction the camera 24 is facing is detected, the processor unit 11 may enlarge the displayed map data, i.e. zooming in. When an opposite movement is detected (thus along the optical axis of the camera 24 in a direction opposite from the direction the camera 24 is facing), the processor unit 11 may scale down the displayed map data, i.e. zooming out.

The amount of zooming in or out depends on the amount of movement of the navigation device 10, 10' along the optical axis. Again, a coefficient of sensitivity may be applied to adjust the zoom speed to the desires of the user. Of course, zooming may also be performed vice versa, i.e. when a movement along the optical axis of the camera 24 in the direction the camera 24 is facing is detected, the processor unit 11 may scale down the displayed map data, i.e. zooming out.

It will be understood that the invention as described above may be applied in a navigation device 10, 10' arranged to display map data is a two dimensional way (2D), but also to a navigation device arranged to display map data in (quasi) perspective or three dimensional way (3D). When a (quasi) perspective or three dimensional mode is used, the map is represented as it would be seen from a viewing point above the surface of the earth, looking down at the earth with a certain viewing angle, as represented by the map data.

In case the navigation device displays the map data in a perspective or three dimensional way (3D), different scroll operations may be performed based on the detected movement, than in the two-dimensional case. For instance, a movement of the navigation device 10, 10' in the direction of the optical axis may not result in a zoom operation, but may be result in scrolling the map data in a direction such that the user gets the impression that he/she 'flies' over the surface of the earth as represented by the map data. Also, a rotational movement may result in a change of a direction in which the map data is viewed from the viewing point. So, in case a counter clockwise rotational movement of the navigation device 10, 10' is detected, the viewing direction may be changed from north to west (thus the map data are scrolled in a clockwise direction).

The pattern recognition techniques may detect all kinds of movements by following features and analyzing the movement of these features. If for instance the majority of all the features move in the same direction, a lateral movement (left-right-up-down, or a combination thereof) may be detected. If for instance the majority of the features in the upper part of the camera feed move to the left, in the lower part of the camera feed move to the right, in the left part of the camera feed move downwards and in the right part of the camera feed move upwards, a (counter clockwise) rotational movement may be detected. Also, if the majority of the features seem to move in a direction away from a centre point, a movement along the optical axis of the camera 24, in the direction the camera 24 is facing, may be detected.

The accuracy of the detected movement based on the camera feed may be further increased by using internal sensor devices 28 (see Fig. 1), such as an accelerometer, gyroscope, etc. The internal sensor devices 28 are arranged to detect movement, accelerations, and rotations of the navigation device 10, 10'. The internal sensor devices 28 may be connected to the processing unit 11 to transmit their readings to the processing unit 11.

The readings of the internal sensor devices may be used to increase the accuracy of the detected movement of the navigation device 10 based on the camera feed. This may increase the quality of the motion/angle detection based on the camera feed or to adjust the speed and/or direction the map is scrolled (translated/rotated/zoomed).

The above described way of scrolling a map based on detected movement of the navigation device 10, 10' by analyzing the camera feed, may be used in combination with state of the art scroll options, such as using (virtual) buttons or a mouse. When used in combination, a user may overrule, complete or correct the scroll movements performed based on the camera feed.

The term navigation device 10, 10' as used in this text does not only refer to a navigation device arranged to determine a current position, or to determine an optimum route to a certain destination, but encompasses all devices that help one to navigate or orientate oneself, by displaying a (part of a) map, such a the navigation device depicted in Fig.'s 4a, 4b and 4c.

In case the invention is used in combination with a navigation device 10 that is provided with the functionality of determining a current position, planning a route and/or navigating according to such a planned route, the navigation device 10 needs to be provided with the option of switching from the first mode, in which the navigation device 10 is used as a map display device only, to the second mode, in which the navigation device 10 is used to guide a user through a planned route.

Switching from the first mode to the second mode and vice versa, may be done manually by the user, e.g. using appropriate buttons, but may also be done automatically by the navigation device 10. Such buttons may also be a virtual button. The button is arranged to provide a signal to the processing unit 11, indicating to switch mode, or specifically to switch to the first or second mode.

For instance, when the navigation device 10 is arranged to receive a GPS signal using positioning device 23, it can detect movement and speed of the movement of the navigation device 10. In case the detected speed (velocity) and/or acceleration is relatively high, for instance with respect to predetermined threshold values, the navigation device 10 may automatically switch (from the second mode) to the first mode. In that case, the user is most likely travelling and is concentrated on a map view based on the current location of the navigation device 10 and the user doesn't need scrolling of the map, except from the scrolling because of the travelling of the navigation device 10.

In case no GPS signal is received by the positioning device 23 of the navigation device 10, the system may switch to the second mode. In that case, the navigation device 10 is most likely indoor, and the user is probably not travelling. The navigation device may use the last valid received GPS position received by the positioning device 23 to determine which part of the map to display on display 18. The navigation device 10 may also use internal sensor devices 28, such as an accelerometer, gyroscope, etc., to further determine the location more precisely.

The navigation device 10 may also switch to the second mode in case according to the positioning device 23, the desired destination (address) has been reached.

Also, if no valid GPS signal is received by the positioning device 23 of the navigation device 10, but relatively much movement is detected by internal sensor devices 28, such as a accelerometer, gyroscope, etc, and/or the camera 24, the navigation device 10 may switch (from the first) to the second mode.

While specific embodiments of the invention have been described above, it will be appreciated that the invention may be practiced otherwise than as described. For example, the invention may take the form of a computer program containing one or more sequences of machine-readable instructions describing a method as disclosed above, or a data storage medium (e.g. semiconductor memory, magnetic or optical disk) having such a computer program stored therein. It will be understood by a skilled person that all software components may also be formed as hardware components.

The descriptions above are intended to be illustrative, not limiting. Thus, it will be apparent to one skilled in the art that modifications may be made to the invention as described without departing from the scope of the claims set out below.

## Claims

1. Handheld navigation device (10, 10'), comprising a processing unit (11) and a display (18), the processing unit (11) being arranged to display map data on the display (18), said display being provided on a front side of said device, **characterised in that** the navigation device (10, 10') further comprises a camera (24) on a rear side of said device and being arranged to provide a camera feed to the processing unit (11), the processing unit (11) further being arranged to:
- receive a camera feed from the camera (24),
- detect a movement of the navigation device (10, 10') based on the received camera feed by distinguishing certain characterizing features in one image, and following those features in a successive image of said camera feed using pattern recognition techniques,
- scroll the displayed map data in response to the detected movement.

2. Navigation device (10, 10') according to any one of the preceding claims, wherein the processing unit (11) is arranged to detect a direction from the detected movement and to scroll the displayed map data in a direction opposite from the detected direction.

3. Navigation device (10, 10') according to any one of the claims 1-2, wherein the processing unit (11) is arranged to detect a distance from the detected movement and to scroll the displayed map data a scroll distance corresponding to the detected distance.

4. Navigation device (10,10') according to claim 3, wherein the scroll distance is adjusted based on a coefficient of sensitivity.

5. Navigation device (10, 10') according to claim 4, wherein the coefficient of sensitivity is adjustable.

6. Navigation device (10, 10') according to any one of the claims 4 - 5, wherein the coefficient of sensitivity further depends on the focus distance of the camera (24).

7. Navigation device (10, 10') according to any one of the preceding claims, wherein the processing unit (11) is arranged to detect a rotation from the detected movement and to scroll the displayed map data by rotating the displayed map data in a direction opposite to the direction of the detected movement.

8. Navigation device (10, 10') according to any one of the preceding claims, wherein the processing unit (11) is arranged to detect a movement in the direction of the optical axis of the camera (24) and to scroll the displayed map data by performing a zoom operation corresponding to the detected movement.

9. Navigation device (10, 10') according to any one of the preceding claims, wherein the navigation device (10, 10') further comprises memory devices (12, 13, 14, 15) to store map data.

10. Navigation device (10) according to any one of the preceding claims, wherein the navigation device (10) further comprises a positioning device (23), arranged to provide the processing unit (11) with information to determine a current position of the navigation device (10), and the navigation device (10) is arranged to be in a first mode, wherein the navigation device (10) is arranged to display map data, or a second mode, wherein the navigation device (10) is arranged to determine a current position using the positioning device (23), plan a route and guide the user through a planned route.

11. Navigation device (10) according to claim 10, wherein the navigation device (10) is arranged to switch from the first mode to the second mode, or vice versa, based on information from the positioning device (23).

12. Navigation device (10) according to claim 11, wherein the information from the positioning device (23) is one of: a destination address, a velocity, an acceleration.

13. Navigation device (10) according to any one of the claims 10 - 12, wherein the navigation device (10) is arranged to switch to the second mode in case no information is provided by the positioning device (23).

14. Navigation device (10) according to claim 10, wherein the navigation device (10) is arranged to switch from the first mode to the second mode, or vice versa, based on input of a user, e.g. by pressing an appropriate button being connected to the processing unit (11).

15. Navigation device (10, 10') according to any one of the preceding claims, wherein the navigation device (10, 10') is further provided with internal sensors devices (28), such as an accelerometer and/or gyroscope, to further increase the accuracy of the detected movement of the navigation device (10, 10') based on the received camera feed.

16. Method of scrolling map data displayed on a handheld navigation device (10), the navigation device (10, 10') comprising a display (18), said display being provided on a front side of said device, the method comprising:
- displaying map data on the display (18), **characterised in that** the navigation device (10, 10') further comprises a camera (24) on a rear side of said device and, the method further comprising:
- receiving a camera feed from the camera (24),
- detecting a movement of the navigation device (10, 10') based on the received camera feed by distinguishing certain characterizing features in one image, and following those features in a successive image of said camera feed using pattern recognition techniques,
- scrolling the displayed map data in response to the detected movement.

17. Computer program, when loaded on a computer arrangement, adapted to perform the method of claim 16.

18. Data carrier, comprising a computer program according to claim 17.

## Patentansprüche

1. Tragbares Navigationsgerät (10, 10'), das eine Recheneinheit (11) und eine Anzeige (18) umfasst, wobei die Recheneinheit (11) so eingerichtet ist, dass sie Kartendaten auf der Anzeige (18) anzeigt, wobei die besagte Anzeige auf einer Vorderseite des besagten Geräts bereitgestellt wird, **dadurch gekennzeichnet, dass** das Navigationsgerät (10, 10') zusätzlich eine Kamera (24) auf einer Rückseite des besagten Geräts umfasst und die so eingerichtet ist, dass sie der Recheneinheit (11) eine Kamerabildzufuhr bereitstellt, wobei die Recheneinheit (11) dazu eingerichtet ist, um:
eine Kamerabildzufuhr von der Kamera (24) zu empfangen,
eine Bewegung des Navigationsgeräts (10, 10') basierend auf der empfangenen Kamerabildzufuhr durch das Unterscheiden bestimmter, charakterisierender Merkmale in einem Bild zu erfassen und Verfolgen dieser Merkmale in einem folgenden Bild der besagten Kamerabildzufuhr unter Verwendung von Techniken der Mustererkennung,
die angezeigten Kartendaten als Reaktion auf die erfasste Bewegung zu rollen.

2. Das Navigationsgerät (10, 10') nach einem der vorhergehenden Ansprüche, **dadurch gekennzeichnet, dass** die Recheneinheit (11) eingerichtet ist, um eine Richtung aus der erfassten Bewegung zu erfassen und die angezeigten Kartendaten in eine Richtung entgegengesetzt der erfassten Richtung zu rollen.

3. Das Navigationsgerät (10, 10') nach einem der Ansprüche 1 und 2, **dadurch gekennzeichnet, dass** die Recheneinheit (11) so eingerichtet ist, um eine Entfernung von der erfassten Bewegung zu erfassen und die angezeigten Kartendaten um eine Rollentfernung, die mit der erfassten Entfernung korrespondiert, zu rollen.

4. Das Navigationsgerät (10, 10') nach Anspruch 3, **dadurch gekennzeichnet, dass** die Rollentfernung basierend auf einem Sensitivitätskoeffizienten angepasst wird.

5. Das Navigationsgerät (10, 10') nach Anspruch 4, **dadurch gekennzeichnet, dass** der Sensitivitätskoeffizient anpassbar ist.

6. Das Navigationsgerät (10, 10') nach einem der Ansprüche 4 und 5, **dadurch gekennzeichnet, dass** der Sensitivitätskoeffizient zudem von der Scharfstellentfernung der Kamera (24) abhängt.

7. Das Navigationsgerät (10, 10') nach einem der vorhergehenden Ansprüche, **dadurch gekennzeichnet, dass** die Recheneinheit (11) eingerichtet ist, um eine Rotation aus der erfassten Bewegung zu erfassen und um die angezeigten Kartendaten durch Rotieren der angezeigten Kartendaten in eine Richtung entgegengesetzt der Richtung der erfassten Bewegung zu rollen.

8. Das Navigationsgerät (10, 10') nach einem der vorhergehenden Ansprüche, **dadurch gekennzeichnet, dass** die Recheneinheit (11) eingerichtet ist, um eine Bewegung in Richtung der optischen Achse der Kamera (24) zu erfassen und die angezeigten Kartendaten zu rollen durch Ausführen einer Vergrößerungsoperation, die mit der erfassten Bewegung korrespondiert.

9. Das Navigationsgerät (10, 10') nach einem der vorhergehenden Ansprüche, **dadurch gekennzeichnet, dass** das Navigationsgerät (10, 10') zudem Speichergeräte (12, 13, 14, 15) zum Speichern von Kartendaten umfasst.

10. Das Navigationsgerät (10) nach einem der vorhergehenden Ansprüche, **dadurch gekennzeichnet, dass** das Navigationsgerät (10) zudem eine Positionierungseinheit (23) umfasst, das eingerichtet ist, um die Recheneinheit (11) mit Informationen zu versorgen, um die aktuelle Position des Navigationsgeräts (10) zu bestimmen, und dass das Navigationsgerät (10) in einem ersten Modus eingerichtet ist, wobei das Navigationsgerät (10) eingerichtet ist, um Kartendaten anzuzeigen, oder in einem zweiten Modus eingerichtet ist, wobei das Navigationsgerät (10) eingerichtet ist, um eine aktuelle Position unter Verwendung der Positionierungseinheit (23) zu bestimmen, eine Strecke zu planen und den Benutzer entlang einer geplanten Strecke zu führen.

11. Das Navigationsgerät (10) nach Anspruch 10, **dadurch gekennzeichnet, dass** das Navigationsgerät (10) eingerichtet ist, um von dem ersten Modus zu dem zweiten Modus zu schalten, oder umgekehrt, basierend auf Information von der Positionierungseinheit (23).

12. Das Navigationsgerät (10) nach Anspruch 11, **dadurch gekennzeichnet, dass** die Information von der Positionierungseinheit (23) eine der Folgenden ist: eine Zieladresse, eine Geschwindigkeit, eine Beschleunigung.

13. Das Navigationsgerät (10) nach einem der Ansprüche 10 bis 12, **dadurch gekennzeichnet, dass** das Navigationsgerät (10) eingerichtet ist, um in den zweiten Modus zu schalten für den Fall, dass keine Information durch das Positioniergerät (23) zur Verfügung gestellt wird.

14. Das Navigationsgerät (10) nach Anspruch 10, **dadurch gekennzeichnet, dass** das Navigationsgerät (10) eingerichtet ist, um von dem ersten Modus zu dem zweiten Modus zu schalten, oder umgekehrt, basierend auf einer Eingabe eines Benutzers, zum Beispiel durch das Drücken eines geeigneten Knopfes, der mit der Recheneinheit (11) verbunden ist.

15. Das Navigationsgerät (10, 10') nach einem der vorhergehenden Ansprüche, **dadurch gekennzeichnet, dass** Navigationsgerät (10, 10') zudem interne Sensoreinrichtungen (28) aufweist, wie zum Beispiel ein Beschleunigungsmesser und/oder Gyroskop, um die Genauigkeit der erfassten Bewegung des Navigationsgeräts (10, 10') zusätzlich zu erhöhen, basierend auf der empfangenen Kamerabildzufuhr.

16. Verfahren zum Rollen von Kartendaten, die auf einem tragbaren Navigationsgerät (10) angezeigt werden, wobei das Navigationsgerät (10, 10') eine Anzeige (18) umfasst, wobei die besagte Anzeige an einer Vorderseite des besagten Geräts bereitgestellt wird, wobei das Verfahren umfasst:
Anzeigen von Kartendaten auf der Anzeige (18), **dadurch gekennzeichnet, dass** das Navigationsgerät (10, 10') zudem eine Kamera (24) an einer Rückseite des besagten Geräts umfasst und wobei das Verfahren zusätzlich umfasst:
Empfangen einer Kamerabildzufuhr von der Kamera (24),
Erfassen einer Bewegung des Navigationsgeräts (10, 10') basierend auf der empfangenen Kamerabildzufuhr durch Unterscheiden bestimmter, charakteristischer Merkmale eines Bildes und Verfolgen dieser Merkmale in einem folgenden Bild der besagten Kamerabildzufuhr unter Verwendung von Techniken der Mustererkennung,
Rollen der angezeigten Kartendaten als Reaktion auf die erfasste Bewegung.

17. Computerprogramm, das, wenn es auf eine Computeranordnung geladen wird, angepasst ist, das Verfahren aus Anspruch 16 auszuführen.

18. Datenträger, der ein Computerprogramm nach Anspruch 17 umfasst.

## Revendications

1. Dispositif de navigation portable (10, 10'), comprenant une unité de traitement (11) et un écran d'affichage (18), l'unité de traitement (11) étant aménagée pour afficher des données cartographiques sur l'écran d'affichage (18), ledit écran d'affichage étant aménagé sur une face frontale dudit dispositif, **caractérisé en ce que** le dispositif de navigation (10, 10') comprend en outre une caméra (24) sur une partie arrière du dispositif et est aménagé pour fournir un chargement de caméra à l'unité de traitement (11), l'unité de traitement (11) étant en outre aménagée pour :
- recevoir un chargement de la caméra (24),
- détecter un mouvement du dispositif de navigation (10, 10') sur la base du chargement de caméra reçu en distinguant certaines caractéristiques typiques d'une image et en suivant ces caractéristiques dans une image successive dudit chargement de caméra en utilisant des techniques de reconnaissance de motifs, et
- faire défiler les données cartographiques affichées en réponse au mouvement détecté.

2. Dispositif de navigation (10, 10') selon l'une quelconque des revendications précédentes, dans lequel l'unité de traitement (11) est aménagée pour détecter une direction à partir du mouvement détecté et faire défiler les données cartographiques affichées dans une direction opposée à celle de la direction détectée.

3. Dispositif de navigation (10, 10') selon l'une quelconque des revendications 1 à 2, dans lequel l'unité de traitement (11) est aménagée pour détecter une distance du mouvement détecté et faire défiler les données cartographiques affichées sur une distance de défilement correspondant à la distance détectée.

4. Dispositif de navigation (10, 10') selon la revendication 3, dans lequel la distance de défilement est ajustée sur la base d'un coefficient de sensibilité.

5. Dispositif de navigation (10, 10') selon la revendication 4, dans lequel le coefficient de sensibilité est ajustable.

6. Dispositif de navigation (10, 10') selon l'une quelconque des revendications 4 et 5, dans lequel le coefficient de sensibilité dépend en outre de la distance de focalisation de la caméra (24).

7. Dispositif de navigation (10, 10') selon l'une quelconque des revendications précédentes, dans lequel l'unité de traitement (11) est aménagée pour détecter une rotation du mouvement détecté et faire défiler les données cartographiques affichées en faisant tourner les données cartographiques affichées dans une direction opposée à la direction du mouvement détecté.

8. Dispositif de navigation (10, 10') selon l'une quelconque des revendications précédentes, dans lequel l'unité de traitement (11) est aménagée pour détecter un mouvement dans la direction de l'axe optique de la caméra (24) et faire défiler les données cartographiques affichées en effectuant une opération de zoomage correspondant au mouvement détecté.

9. Dispositif de navigation (10, 10') selon l'une quelconque des revendications précédentes, dans lequel le dispositif de navigation (10, 10') comprend en outre des dispositifs de mémoire (12, 13, 14, 15) pour stocker des données cartographiques.

10. Dispositif de navigation (10) selon l'une quelconque des revendications précédentes, dans lequel le dispositif de navigation (10) comprend en outre un dispositif de positionnement (23) aménagé pour fournir à l'unité de traitement (11) des informations afin de déterminer une position courante du dispositif de navigation (10) et le dispositif de navigation (10) est aménagé pour se trouver dans un premier mode, dans lequel le dispositif de navigation (10) est aménagé pour afficher des données cartographiques, ou dans un second mode, dans lequel le dispositif de navigation (10) est aménagé pour déterminer une position courante en utilisant le dispositif de positionnement (23), planifier une route et guider l'utilisateur sur une route planifiée.

11. Dispositif de navigation (10) selon la revendication 10, dans lequel le dispositif de navigation (10) est aménagé pour passer du premier mode au second mode, ou vice-versa, sur la base d'informations tirées du dispositif de positionnement (23).

12. Dispositif de navigation (10) selon la revendication 11, dans lequel les informations provenant du dispositif de positionnement (23) sont l'une quelconque d'une adresse de destination, d'une vitesse et d'une accélération.

13. Dispositif de navigation (10) selon l'une quelconque des revendications 10 à 12, dans lequel le dispositif de navigation (10) est aménagé pour passer au second mode dans le cas où aucune information n'est fournie par le dispositif de positionnement (23).

14. Dispositif de navigation (10) selon la revendication 10, dans lequel le dispositif de navigation (10) est aménagé pour passer du premier mode au second mode, ou vice-versa, sur la base d'une entrée d'un utilisateur, par exemple en pressant un bouton approprié qui est connecté à l'unité de traitement (11).

15. Dispositif de navigation (10, 10') selon l'une quelconque des revendications précédentes, dans lequel le dispositif de navigation (10, 10') est encore pourvu de dispositifs capteurs internes (28), tels qu'un accéléromètre et/ou un gyroscope, pour encore augmenter la précision du mouvement détecté du dispositif de navigation (10, 10') sur la base du chargement reçu de la caméra.

16. Procédé de défilement de données cartographiques affichées sur un dispositif de navigation portable (10), le dispositif de navigation (10, 10') comprenant un écran d'affichage (18), ledit écran d'affichage étant aménagé sur une face frontale dudit dispositif, le procédé comprenant les étapes consistant à :
- afficher des données cartographiques sur l'écran d'affichage (18), **caractérisé en ce que** le dispositif de navigation (10, 10') comprend en outre une caméra (24) sur une face arrière dudit dispositif et le procédé comprenant en outre :
- la réception d'un chargement de la caméra (24),
- la détection d'un mouvement du dispositif de navigation (10, 10') sur la base du chargement reçu de la caméra en distinguant certaines caractéristiques typiques dans une image et en suivant ces caractéristiques dans une image successive dudit chargement de caméra en utilisant des techniques de reconnaissance de motifs, et
- le défilement des données cartographiques affichées en réponse au mouvement détecté.

17. Programme d'ordinateur, lorsqu'il est chargé dans un système informatique, qui est à même d'effectuer le procédé selon la revendication 16.

18. Support de données, comprenant un programme d'ordinateur selon la revendication 17.
